# EUROPÄISCHE PATENTSCHRIFT

(11) **EP 2 143 589 B1**
(45) Veröffentlichungstag und Bekanntmachung des Hinweises auf die Patenterteilung: **19.12.2012**
(21) Anmeldenummer: 09075290.8
(22) Anmeldetag: 09.07.2009
(51) Int. Cl.: B60R 13/02

(54) **Dekoroberfläche für Verkleidungsteile und Verfahren zur Herstellung einer Dekoroberfläche eines Kraftfahrzeugesinnenraumes**
Decorative surface for panel covers and method for its manufacture for the vehicle interior
Surface de décor pour parties couverts et procédé de fabrication d'une surface de décor pour l'intérieur d'un véhicule

(30) Priorität: 11.07.2008 DE 102008033283
(43) Veröffentlichungstag der Anmeldung: 13.01.2010
(73) Patentinhaber: Faurecia Innenraum Systeme GmbH, 76767 Hagenbach (DE)
(72) Erfinder: Bradfisch, Karsten, 66955 Pirmasens (DE); Heubel, Timo, 22609 Hamburg-Nienstedten (DE)
(74) Vertreter: Pfenning, Meinig & Partner GbR

(56) Entgegenhaltungen:
- DE-A1-102006 002 834
- DE-A1-102008 046 099
- JP-A- 3 099 832
- US-A1- 2003 168 151

## Beschreibung

Gegenstand der Anmeldung ist ein Verfahren zur Herstellung einer Dekoroberfläche für Verkleidungsteile, insbesondere für Kraftfahrzeuginnenräume. Zudem wird eine Dekoroberfläche für Verkleidungsteile, insbesondere für Kfz-Innenräume, mit einer einteiligen Haut beansprucht.

Dekoroberflächen für Verkleidungsteile, insbesondere für Kfz-Innenräume, werden oftmals mit Ziernähten versehen und aus mehreren Teilen gefertigt, wodurch die Dekoroberflächen wie von Hand gefertigt aussehen. Dies ist insbesondere bei hochwertigen Dekoroberflächen der Fall, wie sie in höherklassigen Kfz eingesetzt werden.

Ein Verfahren zur Herstellung einer derartigen Dekoroberfläche ist aus der US 2003/0168151 A1 bekannt.

Hierbei wird zunächst eine Dekorhaut hergestellt, wobei die Dekorhaut aus einem einzigen Stück oder aus zwei verschiedenen Stücken bestehen kann. Für den Fall, dass die Dekorhaut aus zwei verschiedenen Stücken hergestellt wird, werden diese in ihren Endbereichen miteinander durch eine Funktionsnaht, welche auf der der Sichtseite gegenüber liegenden Seite der Dekorhaut angeordnet ist, vernäht. Für den Fall, dass die Dekorhaut aus einem einzigen Stück besteht, wird in die Dekorhaut an der gewünschten Stelle ein Schnitt eingebracht, so dass die sich im Schnittbereich gegenüberliegenden Teilflächen der Dekorhaut gegenüberliegen und diese gegenüberliegenden Enden miteinander auf der der Sichtseite gegenüberliegenden Seite der Dekorhaut miteinander vernäht werden.

Dieser Prozess birgt jedoch einige Nachteile. Bei der Verwendung von zwei verschiedenen Stücken besteht die Gefahr, dass beim Vernähen der zwei Stücke miteinander große Mengen an Ausschuss produziert werden, da der Nahtverlauf von der exakten Passung der beiden Stücke zueinander abhängt. Zwar wird dies bei der Verwendung lediglich eines Stückes mit einem eingebrachten Schnitt verbessert, es besteht jedoch immer noch die Gefahr, durch fehlerhaftes Einlegen der beiden gegenüberliegenden Enden in die Nähmaschine große Mengen Ausschuss zu produzieren. Des Weiteren verlangt die Aneinanderpassung der auseinander geschnittenen bzw. separaten Teile einen aufwendigen, oftmals von Hand vorzunehmenden Produktionsschritt.

Eine mögliche Alternative zum obigen Verfahren ist aus der DE 10 2006 002 834 A1 bekannt. Mit dem dort dargestellten Verbundpaneel und dem offenbarten Verfahren zu dessen Herstellung ist es möglich, Paneele mit freiliegenden Nähten herzustellen und mithilfe derselben Einrichtungen und desselben Verfahrens ebenfalls Paneele ohne solche Nähte herzustellen. Hierbei wird zunächst eine integrale vorgefertigte Bespann- und Abdeckkomponente hergestellt, wobei die Bespannkomponente im Bereich ihrer freiliegenden Oberfläche mindestens ein visuelles Merkmal mit einer linearen Struktur aufweist, die eine funktionelle Montage oder fertigungsbedingte Linie oder das Muster einer solchen Linie imitiert und simuliert. Anschließend wird diese vorgefertigte Bespannkomponente oder dergleichen auf einem den Körper des Paneels bildenden Substrat durch Kleben, Schweißen, Herstellen einer dazwischenliegenden zellartigen Haftschicht, beispielsweise durch Ausschäumen, befestigt.

Nachteilig an dem so hergestellten Paneel ist es, dass die Lage des visuellen Merkmals der Abdeckkomponente lediglich durch das Gießen bzw. Herstellen der Haut vordefiniert wird. Eine flexible Handhabung der Haut, welche zudem eine besondere Positionierung der von der Sichtseite abgewandten Falte mit sich bringt, ist nicht möglich. Hierdurch weist das Paneel eine gewisse Mindestdicke auf, welche durch die ursprünglich hergestellte Form des visuellen Merkmals definiert ist.

Aufgabe der vorliegenden Erfindung ist es, ein Verfahren zur Herstellung einer Dekoroberfläche sowie eine Dekoroberfläche für Verkleidungsteile zur Verfügung zu stellen, welche die vorgenannten Nachteile mindert, so dass zum einen die Qualität der Dekoroberfläche erhöht und zum anderen der Ausschuss reduziert werden kann.

Die Aufgabe wird mit dem Verfahren des Anspruchs 1 sowie der Dekoroberfläche für Verkleidungsteile nach Anspruch 6 gelöst. Vorteilhafte Weiterbildungen der Erfindung sind in den untergeordneten Ansprüchen aufgeführt.

Bei dem erfindungsgemäßen Verfahren zum Herstellen einer Dekoroberfläche für Verkleidungsteile, insbesondere für Kraftfahrzeuginnenräume bzw. -innenverkleidungsteile, wird zunächst eine einteilige Haut bereitgestellt, die eine geschlossene Falte aufweist. Der Verlauf der geschlossenen Falte kann dabei schlaufenförmig sein. Die Schlaufe ist dabei von der Sichtseite weggerichtet, so dass die Falte auf der der Sichtseite abgewandten Seite einen Überstand wirft. Die Falte ist als geschlossen bezeichnet, da es sich um eine einteilige Haut handelt.

Anschließend wird der Überstand mit einer Naht derart vernäht, dass die Falte verengt bzw. vollständig verschlossen wird. Wiederum anschließend werden benachbart zur Falte zumindest bereichsweise eine oder mehrere Ziernähte angebracht.

Mithilfe der geschlossenen Falte wird der Nahtverlauf eindeutig definiert. Auf diese Weise können auch komplizierte Nahtverlaufsgeometrien bereits bei der Produktion der einteiligen Haut bereitgestellt werden, ohne dass vor der Vernähung des Überstandes derart, dass die Falte verengt wird, ein Schnitt in die Haut eingebracht werden muss. Von daher ist auch keine spezielle Vorrichtung zum Aneinanderpassen von zwei nicht miteinander verbundenen, jedoch zu vernähenden Teilen der Dekorhaut nötig. Weiterhin ist es vorteilhaft, dass der Verfahrensschritt des Aufschneidens entfallen kann. Hierdurch und durch den Verzicht auf eine spezielle Vorrichtung zur Anpassung wird es möglich, weniger Ausschuss zu produzieren, da der Verlauf der Naht im Wesentlichen bereits durch den Verlauf der Falte vorgegeben wird.

Die derart hergestellte Dekoroberfläche für Verkleidungsteile, insbesondere für Kfz-Innenräume, enthält also eine einteilige Haut mit einer geschlossenen Falte, wobei zur Verengung der Falte diese auf der der Sichtseite abgewandten Seite vernäht ist und benachbart zur Falte zumindest bereichsweise eine Ziernaht angebracht ist.

Die Dekoroberfläche zeichnet sich dadurch aus, dass der Nahtverlauf besonders schön ist, die Dekoroberfläche dabei einfach herzustellen ist und zugleich komplizierte Nahtverläufe realisiert werden können.

Im Weiteren wird noch auf vorteilhafte Ausführungsformen eingegangen, wobei die verschiedenen Ausführungsformen des Verfahrens bzw. der Dekoroberfläche miteinander kombiniert werden können. Dies bedeutet insbesondere, dass die in dem Verfahren enthaltenen Merkmale auch als Merkmale der Dekoroberflächen verstanden werden sollen.

In einer Ausführungsform des Verfahrens wird die geschlossene Falte bei der Herstellung der einteiligen Haut zumindest teilweise grabenförmig eingebracht. Hierdurch liegt die geschlossene Falte aufgrund der Eigenstabilität der Haut bereits vor dem Vernähen vorzugsweise im Wesentlichen formstabil vor, was eine verbesserte Definition des späteren Nahtverlaufs zulässt. Durch das Vorformen entfällt die manuelle Anrichtung der geschlossenen Falte durch Schlaufenlegung. Hierbei ist zu beachten, dass der Graben auch asymmetrisch ausgeführt werden sein.

Eine weitere vorteilhafte Ausführungsform ist es, wenn die geschlossene Falte eine vorzugsweise bei der Herstellung der einteiligen Haut eingebrachte Materialverdickung aufweist, wobei der Überstand so vernäht wird, dass die Materialverdickung auf der der Sichtseite abgewandten Seite der den Überstand verengenden Naht liegt. Mithilfe der Materialverdickung wird zudem eine verbesserte Führung des späteren Nahtverlaufs aufgrund des Faltenverlaufs möglich. Die Materialverdickung verändert die Eigenspannung der Haut innerhalb der geschlossenen Falte bzw. des Überstands. Durch den Verlauf und die Art der Materialverdickung wird es möglich, bereits vor dem Vernähen verbesserte Faltenverläufe und somit Nahtverläufe zu definieren.

In einer weiteren Ausführungsvariante des Verfahrens weist die einteilige Haut zwei Bereiche unterschiedlicher Eigenschaften auf, wobei eine Grenze zwischen den Bereichen innerhalb des Überstands der geschlossenen Falte verläuft und die unterschiedlichen Eigenschaften von der Sichtseite her erfassbar sind. Zu den vorgenannten Eigenschaften zählen beispielsweise die Farbe, die Prägung oder das Material der Haut. Beim Verlauf der Grenze im Überstand, d. h. innerhalb der geschlossenen Falte, wird nach der Vernähung bzw. Verengung der Falte z. B. die Farbtrennlinie durch die Naht verdeckt. Auf diese Weise entsteht ein neuer, scharfer Grenzbereich zwischen den unterschiedlichen Eigenschaften, welcher durch die Naht gegeben ist. Dabei können die unterschiedlichen Eigenschaften der einteiligen Haut bereits bei der Herstellung der einteiligen Haut vorhanden sein. So bietet sich beispielsweise bei der Verwendung einer zweifarbigen Haut, wobei die zwei Farben in den zwei Bereichen verlaufen, an, ein InMould-Printing (IMP) Verfahren zu verwenden. Selbstverständlich ist es auch möglich, mehr als lediglich zwei Bereiche unterschiedlicher Eigenschaften in die einteilige Haut einzubringen. So können auch drei, vier oder fünf unterschiedliche Eigenschaften in verschiedenen Falten voneinander abgegrenzt sein. Dadurch, dass die Grenze innerhalb des Überstands verläuft und der Überstand verengt wird, muss die Grenze zwischen den unterschiedlichen Eigenschaften nicht zwangsläufig scharf verlaufen, sondern es kann ein leicht fließender Übergang innerhalb des Überstands vorhanden sein. Dies senkt die Produktionskosten für die einteilige Haut mit zwei oder mehreren unterschiedlichen Bereichen unterschiedlicher Eigenschaften drastisch.

In einer Ausführungsform des Verfahrens wird in einem Teilbereich der einteiligen Haut eine weitere Haut angeordnet, wobei ein Endbereich der weiteren Haut in der geschlossenen Falte liegt und dieser Endbereich zusammen mit dem Überstand vernäht wird. Dies ist insbesondere dann vorteilhaft, wenn die weitere Haut eine Haut ist, welche nicht in einem Formwerkzeug hergestellt werden kann. Durch das Einbringen der weiteren Haut in die Falte wird es jedoch trotzdem möglich, über die Naht eine feste Verbindung zwischen der einteiligen Haut und der weiteren Haut herzustellen. Anschließend kann beispielsweise die weitere Haut in dem Teilbereich der einteiligen Haut, welcher einseitig der geschlossenen Falte liegt, kaschiert, verklebt oder vernäht werden. Hierdurch ist es möglich, ein besonders hochwertig aussehendes Verkleidungsteil zu produzieren, welches dennoch günstig und technisch einfach herstellbar ist.

Als bevorzugte Materialien für die einteilige Haut kommen Kunstlederhäute, Slush-Häute, TPO-Folien, PVC-Folien, Schaumfolien (welche vorteilhafterweise mit Polypropylenschaum hinterschäumt werden), Sprühhäute oder Gießhäute in Frage. Bei diesen künstlich und zumeist in Formwerkzeugen hergestellten einteiligen Häuten werden die gängigen Produktionsverfahren verwendet. Daher ist es unproblematisch, die geschlossene Falte in bereits vorfixierter Form in die einteilige Haut einzubringen. Als Materialien für die weitere Haut kommen eine Lederhaut, eine Stoffhaut oder andere Häute in Frage, welche nicht großer Hitze und Umgebungen geschmolzener Plastiken ausgesetzt werden können, wie beispielsweise Stoffe, Vliese, Netze oder ähnliche Gewebe. Selbstverständlich ist es auch möglich, die einteilige Haut oder die weitere Haut zumindest bereichsweise in mehr als einer Lage auszubilden. Hierdurch wird die Dicke und somit die Haptik der Haut verändert.

In einer weiteren Ausführungsform weist die hergestellte Dekoroberfläche eine abgedichtete Ziernaht auf. Auf diese Weise kann bei einer nach der Vernähung vorgenommenen Hinterschäumung der Dekoroberfläche kein Schaum durch die Ziernaht hindurchdringen. Ähnliches gilt auch für die funktionelle Naht, welche ebenfalls abgedichtet vorliegen kann.

Die Dekoroberfläche kann beispielsweise in einem Verkleidungsteil zur Anwendung kommen, wobei das Verkleidungsteil einen Träger aufweist und sich zwischen der Dekoroberfläche und dem Träger eine Schaumschicht befindet, welche durch Hinterspritzen oder andere Schäumprozesse eingebracht werden kann.

Im Folgenden soll die Erfindung anhand einiger Ausführungsbeispiele genauer erläutert werden. Es zeigen:
- Fig. 1: einen Ausschnitt aus einer Instrumententafel;
- Fig. 2: eine einteilige Haut wie in Fig. 1 gezeigt;
- Fign. 3a-d: verschiedene Ausführungsformen der geschlossenen Falte der einteiligen Haut;
- Fig. 4: eine einteilige Haut mit zwei Bereichen unterschiedlicher Eigenschaften;
- Fig. 5: eine einteilige Haut mit einer in einem Teilbereich angeordneten weiteren Haut;
- Fig. 6a,b: Verkleidungsteile mit Ausführungsformen einer Dekoroberfläche.

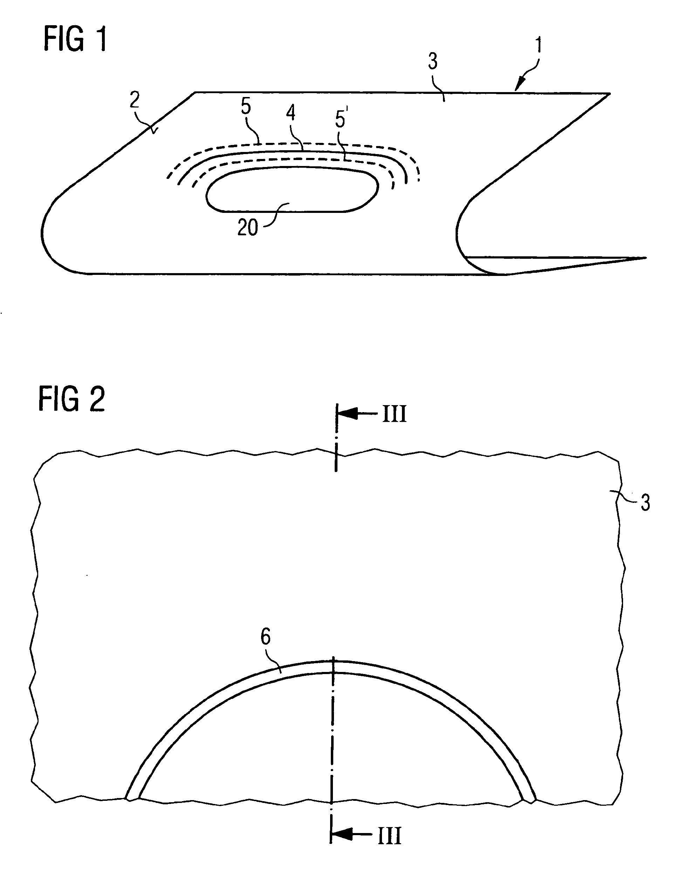

Die Fig. 1 zeigt ein Verkleidungsteil 1, auf welchem eine Dekoroberfläche 2 angeordnet ist, wobei die Dekoroberfläche 2 im Wesentlichen aus einer einteiligen Haut 3 besteht. Die einteilige Haut 3 weist eine Naht 4 auf, welche durch zwei Ziernähte 5, 5' gesäumt wird. Unterhalb der Nähte 4 bzw. Ziernähte 5, 5' befindet sich eine ovale Öffnung 20, in welcher beispielsweise Instrumente oder ein Handschuhfach angeordnet werden können. Das Verkleidungsteil 1 soll lediglich illustratorisch zeigen, inwiefern die eingebrachten Nähte bzw. Ziernähte das Verkleidungsteil 1 aufwerten.

In der Fig. 2 wird die einteilige Haut 3 der Fig. 1 im ausgebreiteten, flachen Zustand dargestellt. Dabei weist die einteilige Haut 3 eine geschlossene Falte 6 auf, welche sich kurvenförmig über einen Teilbereich der einteiligen Haut 3 hinweg erstreckt. Im Unterschied zur Fig. 1 ist in der einteiligen Haut 3 der Fig. 2 noch keine Naht 4 eingebracht. Die Naht 4 wird der Fig. 1 entsprechend derart eingebracht, dass die geschlossene Falte 6, welche sich in die Ebene der einteiligen Haut 3 blickend in die Papierebene hinein erstreckt, verengt wird, so dass im vernähten Zustand lediglich eine Naht 4 der Form der geschlossenen Falte 6 folgend zu sehen ist. Ergänzend kann die Naht 4 durch eine oder mehrere Ziernähte 5 ggf. auch abschnittsweise gesäumt sein. Dies soll anhand einiger Querschnitte genauer illustriert werden.

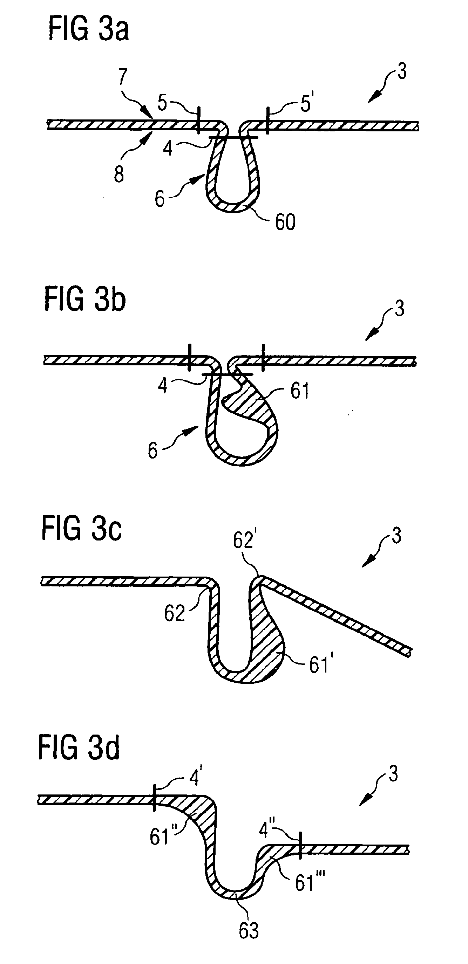

In der Fig. 3a ist ein Teilbereich der einteiligen Haut 3 dargestellt. Die einteilige Haut 3 weist eine Naht 4 sowie zwei die Naht säumende Ziernähte 5, 5' auf. Die Naht 4 verengt dabei die Falte 6 bzw. einen Überstand 60 der Falte 6. Nach dem Einbringen der Naht 4 ist von der Sichtseite 7 aus der Überstand 60 nicht mehr sichtbar, da durch die Naht 4 die Falte 6 komplett geschlossen wird. Die der Sichtseite 7 gegenüberliegende Seite 8 befindet sich bei dem in der Fig. 1 dargestellten Verkleidungsteil auf der nicht dargestellten Seite.

Die in der Fig. 3a dargestellte einteilige Haut 3 ist eine Slush-Haut. Diese kann mit aus dem Stand der Technik bekannten Verfahren leicht derart hergestellt werden, dass die Falte 6 mit dem Überstand 60 bereits nach Produktion der einteiligen Haut 3 vorhanden ist. Dies vereinfacht das spätere Einbringen der Naht 4. Nachdem die Naht 4 eingebracht worden ist, werden auch die Ziernähte 5, 5' in festgelegten Abständen, vom Mittelpunkt der Naht 4 aus betrachtet, eingebracht.

In der Fig. 3b ist eine alternative Ausführungsform einer einteiligen Haut 3 gezeigt. Es sind wiederum die Naht 4 und die beiden Ziernähte 5, 5' erkennbar. In der Falte 6 befindet sich eine Materialverdickung 61, welche den rechten Teil der Falte 6 unter eine andere Eigenspannung setzt als den linken Teil. Hierdurch kann eine Formgebung des Nahtverlaufs durch die unterschiedliche Eigenspannung innerhalb der Falte gegeben sein. Zudem wird durch die Materialverdickung die Formstabilität der Falte erhöht. Zudem kann durch die Materialverdickung 61 der Ort der Falte 6, an welchem die Naht 4 eingebracht wird, genauer definiert werden, was eine bessere Naht und somit ein schöneres Aussehen der einteiligen Haut und somit der Dekoroberfläche zur Folge hat. Selbstverständlich kann sich die Materialverdickung 61 entlang der gesamten Falte ziehen. Sie kann jedoch auch lediglich bereichsweise vorliegen.

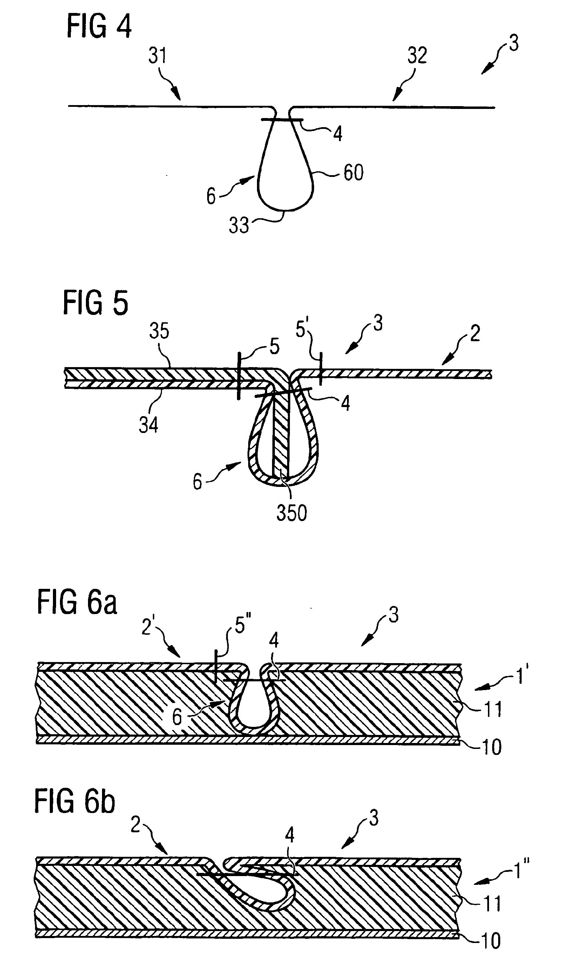

In der Fig. 3c ist eine andere Variante einer einteiligen Haut 3 dargestellt. Die einteilige Haut 3 weist eine Falte 6 mit einer ersten Kante 62 und einer zweiten Kante 62' auf, wobei die Falte 6 zudem eine Materialverdickung 61' umfasst. Die Kanten 62, 62' sind zunächst bei der Herstellung der einteiligen Haut vorgeformt. Dies bedeutet, dass sich der links der Kante 62 befindliche Bereich der einteiligen Haut 3 in einem anderen Winkel zu dem sich rechts der Kante 62' befindlichen Teil der einteiligen Haut 3 erstreckt. Durch das Einbringen einer Naht 4 zwischen der Kante 62 und dem Bereich zwischen der Kante 62' und der Materialverdickung 61' wird nun der links der Kante 62 liegende Bereich und der rechts neben der Kante 62' liegende Bereich auf eine plane Ebene gezogen, wodurch sich die darunter liegende Falte ebenfalls in einem leichten Winkel zur Oberfläche erstreckt. Hierdurch kann erreicht werden, dass die Falte sich im Wesentlichen an die Unterseite der einteiligen Haut 3 anschmiegt, so dass der durch die Falte 6 in Anspruch genommene Raum verkleinert wird. Hierzu wird auf die Illustration in der Fig. 6b verwiesen. Des Weiteren kann die vorliegende Geometrie der Fig. 3c jedoch auch einen unterschiedlichen Nahtverlauf zur Folge haben.

In der Fig. 3d ist eine weitere Ausführungsform einer einteiligen Haut 3 dargestellt. Die einteilige Haut 3 ist im unvernähten Zustand ohne eine funktionelle Naht wie die Naht 4 der Fign. 3a-c dargestellt. Die einteilige Haut 3 weist im Bereich zweier Kanten Materialverdickungen 61" und 61"' auf, wobei sich zwischen diesen ein Graben 63 erstreckt. Beim Einbringen einer funktionellen Naht wie beispielsweise der Naht 4 werden nun die Stellen 4' und 4'' miteinander in Deckung gebracht und anschließend vernäht. Auch hierdurch entsteht eine spezielle Geometrie der Naht sowie der darunter liegenden verengten Falte. Dabei kann beispielsweise für den zwischen den Punkten 4' und 4" liegenden Bereich der einteiligen Haut 3 auf eine Kaschierung bzw. Färbung verzichtet werden, da dieser Bereich für den von der Sichtseite auf die einteilige Haut 3 schauenden Betrachter nicht sichtbar ist.

In der Fig. 4 soll anhand einer einteiligen Haut 3 dargestellt werden, wie die einteilige Haut 3 zwei Bereiche mit unterschiedlichen Eigenschaften aufweisen kann. Die einteilige Haut 3 weist einen ersten Bereich 31 und einen zweiten Bereich 32 auf, welche auf verschiedenen Seiten der Falte liegen. Die beiden Bereiche 31 bzw. 32 grenzen an der Grenze 33 aneinander, wobei die Grenze 33 lediglich im Bereich des Überstands 60 der Falte 6 liegen muss. Bei einem späteren Einbringen einer Naht 4 wird die Grenze 33 zusammen mit dem restlichen Überstand 60 abgeschnürt, so dass die Grenze 33 von der Sichtseite aus nicht mehr sichtbar ist. Hierdurch entsteht eine einteilige Haut 3, bei welcher die Bereiche 31 bzw. 32 einen scharfen Übergang, welcher durch die Naht 4 vermittelt wird, bilden. Bei den unterschiedlichen Eigenschaften kann es sich beispielsweise um Farbe, Prägemuster oder Material der einteiligen Haut handeln. Dabei kann beispielsweise die Farbe mittels eines IMP-Verfahrens bereits bei der Produktion der einteiligen Haut 3 und dem Einbringen der Falte 6 in die einteilige Haut 3 aufgebracht werden. Selbiges gilt für ein Prägemuster. Des Weiteren ist es möglich, eine einteilige Haut 3 aus zwei verschiedenen Materialien wie beispielsweise PVC und TPO herzustellen, wobei die beiden Materialien an der Grenze 33 aneinandergrenzen. Durch die Vernähung an der Naht 4 entsteht so ein scharfer Übergang zwischen der PVC- und der TPO-Folie.

In der Fig. 5 ist ein weiteres Ausführungsbeispiel einer Dekoroberfläche gezeigt. Die Dekoroberfläche weist wiederum eine einteilige Haut 3 auf, wobei die einteilige Haut 3 einen Teilbereich 34 umfasst, auf welchem eine weitere Haut 35 aufliegt. Die weitere Haut 35 besitzt einen Endbereich 350, welcher in die Falte 6 geführt ist und beim Verengen der Falte 6 mittels der Naht 4 mit vernäht wird. Hierdurch entsteht eine feste Verbindung zwischen der weiteren Haut 35 und der einteiligen Haut 3. Weiterhin entsteht ein scharfer Übergang zwischen der weiteren Haut 35 und der einteiligen Haut 3 im Bereich der Naht 4, wodurch die Dekoroberfläche deutlich aufgewertet werden kann. Im vorliegenden Falle handelt es sich bei der einteiligen Haut 3 um eine TPO-Folie. Die weitere Haut 35 ist eine Lederhaut, so dass durch das Einbringen der weiteren Haut ein Übergang zwischen der TPO-Folie und dem Leder geschaffen wird. Mithilfe der Falte 6 wird zudem erreicht, dass keine großen Mengen des teuren Ledermaterials der weiteren Haut 35 verschwendet werden. Da der Endbereich 350 am unteren Ende der Falte 6 anschlägt, kann dieser nicht weitergeschoben werden, so dass kein Material verschwendet wird. Die Verbindung zwischen dem restlichen Teil der weiteren Haut 35 und dem Teilbereich 34 der einteiligen Haut 3 kann beispielsweise mittels Kaschieren oder einem weiteren Vernähen oder Verkleben vorgenommen werden.

In den Fign. 6a-b sind Ausführungsbeispiele für eine hinterschäumte Dekoroberfläche mit Träger gezeigt. Die Fig. 6a zeigt eine einteilige Haut 3 mit Falte 6 und einer Naht 4, wobei die Naht 4 lediglich durch eine Ziernaht 5" gesäumt wird. Die Ziernaht 5" ist dabei derart in die einteilige Haut eingebracht worden, dass diese schaumdicht ist und somit Schaum nicht auf die Sichtseite 7 austreten kann. Anschließend wird die einteilige Haut im vernähten Zustand in ein Werkzeug angelegt, ebenso wie der Träger 10, und mit einer Schaummasse 11 hinterspritzt. Das derart hergestellte Verkleidungsteil 1' ist von hoher Qualität und zeigt einen definierten, qualitativ hochwertigen Nahtverlauf 4.

In der Fig. 6b ist ein weiteres Verkleidungsteil 1'' gezeigt, bei dem der Verlauf der verengten geschlossenen Falte 6 durch die Geometrie der in der Fig. 3c oder 3d gezeigten einteiligen Haut 3 definiert ist. Es ist deutlich zu sehen, dass die Falte 6 sich seitlich erstreckt und somit zum einen den Nahtverlauf 4 und zum anderen die Dicke der Schaumschicht 11 beeinflusst.

Weiterhin sollte beachtet werden, dass die hier genannten Materialien durch die in den Ansprüchen genannten Materialien ergänzt bzw. ersetzt werden können.

## Patentansprüche

1. Verfahren zum Herstellen einer Dekoroberfläche (2) für Verkleidungsteile (1; 1'; 1"), insbesondere für Kraftfahrzeuginnenräume, wobei
a) eine einteilige Haut (3) bereitgestellt wird, die eine geschlossene Falte (6) mit einer Materialverdickung (61; 61') aufweist und die Haut im Bereich der Falte auf der der Sichtseite (7) abgewandten Seite (8) einen Überstand (60) aufweist, und
b) der Überstand (60) mit einer Naht (4) so vernäht wird, dass die Falte verengt wird und die Materialverdickung (61; 61') zumindest teilweise auf der der Sichtseite (7) abgewandten Seite (8) der den Überstand (60) verengenden Naht (4) liegt.

2. Verfahren nach Anspruch 1, **dadurch gekennzeichnet, dass** benachbart zur Falte (6) zumindest bereichsweise eine Ziernaht (5, 5') angebracht wird.

3. Verfahren nach einem der vorhergehenden Ansprüche, **dadurch gekennzeichnet, dass** die einteilige Haut (3) zwei Bereiche (31, 32) unterschiedlicher Eigenschaften aufweist, wobei eine Grenze (33) zwischen den zwei Bereichen (31, 32) im Überstand (60) der geschlossenen Falte (6) verläuft.

4. Verfahren nach einem der vorhergehenden Ansprüche, **dadurch gekennzeichnet, dass** in einem Teilbereich (34) der einteiligen Haut (3) eine weitere Haut (35) angeordnet wird, wobei ein Endbereich (350) der weiteren Haut (35) in der geschlossenen Falte (6) liegt und der Endbereich (35) zusammen mit dem Überstand (60) vernäht wird.

5. Dekoroberfläche (2) für Verkleidungsteile (1), insbesondere für Kfz-Innenräume, enthaltend eine einteilige Haut (3) mit einer geschlossenen Falte (6), wobei zur Verengung der Falte diese auf der der Sichtseite (7) abgewandten Seite (8) vernäht ist, **dadurch gekennzeichnet, dass** die einteilige Haut (3) in der der Sichtseite (7) abgewandten Seite (8) der Naht (4) zur Verengung der Falte eine Materialverdickung (61, 61') aufweist.

6. Dekoroberfläche nach Anspruch 5, **dadurch gekennzeichnet, dass** benachbart zur Falte (6) zumindest bereichsweise eine Ziernaht (5, 5') angebracht ist.

7. Dekoroberfläche nach einem der Ansprüche 5 oder 6, **dadurch gekennzeichnet, dass** die einteilige Haut zwei Bereiche (31, 32) unterschiedlicher Eigenschaften aufweist, wobei eine Grenze (33) zwischen den zwei Bereichen auf der der Sichtseite (7) abgewandten Seite der Naht (4) zur Verengung der Falte verläuft.

8. Dekoroberfläche nach einem der Ansprüche 5 bis 7, **dadurch gekennzeichnet, dass** in einem Teilbereich der einteiligen Haut (3) eine weitere Haut (35) angeordnet ist, wobei ein Endbereich (350) der weiteren Haut in der geschlossenen Falte (6) liegt und der Endbereich durch die Naht (4) zur Verengung der Falte vernäht ist.

9. Dekoroberfläche nach einem der Ansprüche 5 bis 8, **dadurch gekennzeichnet, dass** die einteilige Haut (3) eine Kunstlederhaut, eine Slushhaut, eine TPO-Folie, eine PVC-Folie, eine Schaumfolie, eine Sprühhaut oder eine Gießhaut ist.

10. Dekoroberfläche nach einem der Ansprüche 5 bis 9, **dadurch gekennzeichnet, dass** die einteilige Haut zumindest bereichsweise in mehr als einer Lage ausgebildet ist.

11. Dekoroberfläche nach Anspruch 6, **dadurch gekennzeichnet, dass** die Ziernaht eine abgedichtete Ziernaht ist.

12. Dekoroberfläche nach einem der Ansprüche 5 bis 11, **dadurch gekennzeichnet, dass** die der Sichtseite (7) der Dekoroberfläche abgewandte Seite (8) mit einer Schaumschicht (11) und/oder einem Träger (10) verbunden ist.

## Claims

1. A method of manufacturing a decor surface (2) for trim parts (1; 1'; 1"), in particular for vehicle interiors, wherein
a) a single-part skin (3) is provided which has a closed fold (6) with a thickened material portion (61; 61') and the skin has an overhang (60) in the region of the fold on the side (8) remote from the visible side (7); and
b) the overhang (60) is sewed to a seam (4) so that the fold is narrowed and the thickened material portion (61; 61') lies at least in part on the side (8) of the seam (4) narrowing the overhang (60) and remote from the visible side (7).

2. A method in accordance with claim 1, **characterised in that** a decorative seam (5, 5') is attached at least regionally adjacent to the fold (6).

3. A method in accordance with one of the preceding claims, **characterised in that** the single-part skin (3) has two regions (31, 32) of different properties, with a boundary (33) extending between the two regions (31, 32) in the overhang (60) of the closed fold (6).

4. A method in accordance with one of the preceding claims, **characterised in that** a further skin (35) is arranged in a part region (34) of the single-part skin (3), with an end region (350) of the further skin (35) being disposed in the closed fold (6) and the end region (354) being sewn together with the overhang (60).

5. A decor surface (2) for trim parts (1), in particular for motor vehicle interiors, comprising a single-part skin (3) having a closed fold (6), wherein the fold is sewn on the side (8) remote from the visible side (7) for narrowing the fold, **characterised in that** the single-part skin (3) has a thickened material portion (61, 61') in the side (8) of the seam (4) remote from the visible side (7) for narrowing the fold.

6. A decor surface in accordance with claim 5, **characterised in that** a decorative seam (5, 5') is attached at least regionally adjacent to the fold (6).

7. A decor surface in accordance with one of the claims 5 or 6, **characterised in that** the single-part skin has two regions (31, 32) of different properties, with a border (33) between the two regions extending on the side of the seam (4) remote from the visible side (7) for narrowing the fold.

8. A decor surface in accordance with one of the claims 5 to 7, **characterised in that** a further skin (35) is arranged in a part region of the single-part skin (3), with an end region (350) of the further skin being disposed in the closed fold (6) and with the end region being sewn by the seam (4) for narrowing the fold.

9. A decor surface in accordance with one of the claims 5 to 8, **characterised in that** the single-part skin (3) is a skin of imitation leather, a slush skin, a TPO film, a PVC film, a foam film, a spray skin or a moulded skin.

10. A decor surface in accordance with one of the claims 5 to 9, **characterised in that** the single-part skin is made in more than one ply at least regionally.

11. A decor surface in accordance with claim 6, **characterised in that** the decorative seam is a sealed decorative seam.

12. A decor surface in accordance with one of the claims 5 to 11, **characterised in that** the side (8) remote from the visible side (7) of the decor surface is connected to a foam layer (11) and/or to a carrier (10).

## Revendications

1. Procédé de fabrication d'une surface de décor (2) pour éléments de garniture (1 ; 1' ; 1"), en particulier pour l'intérieur d'un véhicule, où a) une membrane d'une seule pièce (3) est fournie, qui comprend un pli fermé (6) avec un épaississement du matériau (61 ; 61'), et où la membrane présente dans la zone avoisinant le pli, du côté (8) tourné à l'opposé de la surface visible (7), une saillie (60), et b) la saillie (60) est suturée avec une couture (4) de telle façon que le pli en est resserré et que l'épaississement du matériau (61 ; 61') se trouve au moins en partie sur le côté (8) tourné à l'opposé de la surface visible (7) de la couture (4) resserrant la saillie (60).

2. Procédé de fabrication selon la revendication 1, **caractérisé en ce qu'**au voisinage du pli (6), on appose une couture décorative (5, 5') au moins par endroits.

3. Procédé de fabrication selon l'une des revendications précédentes **caractérisé en ce que** la membrane d'une seule pièce (3) présente deux parties (31, 32) aux caractéristiques différentes, où une délimitation (33) entre les deux parties (31, 32) court dans la saillie (60) du pli fermé (6).

4. Procédé de fabrication selon l'une des revendications précédentes **caractérisé en ce que** dans une section partielle (34) de la membrane d'une seule pièce (3), une membrane supplémentaire (35) est positionnée, où une extrémité (350) de la membrane supplémentaire (35) se trouve dans le pli fermé (6) et l'extrémité (350) est cousue conjointement avec la saillie (60).

5. Surface de décor (2) pour éléments de garniture (1), en particulier pour l'intérieur d'un véhicule, comprenant une membrane d'une seule pièce (3) avec un pli fermé (6), où en vue de provoquer un resserrement du pli, ce dernier est cousu du côté (8) opposé à la surface visible (7), **caractérisée en ce que** la membrane d'une seule pièce (3) présente un épaississement du matériau (61, 61') sur le côté (8) opposé à la surface visible (7) de la couture (4) destinée à resserrer le pli (6).

6. Surface de décor selon la revendication 5, **caractérisée en ce qu'**au voisinage du pli (6), on appose une couture décorative (5, 5') au moins par endroits.

7. Surface de décor selon l'une des revendications 5 ou 6, **caractérisée en ce que** la membrane d'une seule pièce (3) présente deux parties (31, 32) aux caractéristiques différentes, où une délimitation (33) entre les deux parties (31, 32) court du côté opposé à la surface visible (7) de la couture (4) destinée à resserrer le pli (6).

8. Surface de décor selon l'une des revendications 5 à 7, **caractérisée en ce que** dans une section partielle (34) de la membrane d'une seule pièce (3), une membrane supplémentaire (35) est positionnée, où une extrémité (350) de la membrane supplémentaire (35) se trouve dans le pli fermé (6) et l'extrémité (350) est cousue par la couture (4) destinée au resserrement du pli (6).

9. Surface de décor selon l'une des revendications 5 à 8, **caractérisée en ce que** la membrane d'une seule pièce (3) est faite de cuir artificiel, d'une pièce moulée par embouage, d'un film de PVC, d'un film en TPO, d'une feuille en mousse, d'une membrane pulvérisée ou d'une membrane coulée.

10. Surface de décor selon l'une des revendications 5 à 9, **caractérisée en ce que** la membrane d'une seule pièce (3) est au moins par parties composée de plus d'une couche.

11. Surface de décor selon la revendication 6, **caractérisée en ce que** la couture décorative (5) est une couture décorative étanchéifiée.

12. Surface de décor selon l'une des revendications 5 à 11, **caractérisée en ce que** le côté (8) opposé à la surface visible (7) de la surface de décor est lié à une couche en mousse (11) ou à un support (10).
